# EUROPÄISCHE PATENTANMELDUNG

(11) **EP 0 722 790 A2**
(43) Veröffentlichungstag der Anmeldung: **24.07.1996**
(21) Anmeldenummer: 95119721.9
(22) Anmeldetag: 14.12.1995
(51) Int. Cl.: B09B 1/00

(54) **Verfahren und Einrichtung zur oberirdischen Deponierung von anorganischen Sonderabfällen**

(30) Priorität: 16.12.1994 DE 4445099
(71) Anmelder: R+T Recycling GmbH, 55122 Mainz (DE)
(72) Erfinder: Frehmann, Wilfried, Dr.-Geol., 55278 Dolgesheim (DE)

(57) **Zusammenfassung**

Die vorliegende Erfindung betrifft ein Verfahren und eine Einrichtung zur oberirdischen Deponierung von anorganischen Sonderabfällen auf einem Deponiegelände mit einer Annahmestation (1) und einem Ablagerungsbereich (3), bei dem die mit Bindemitteln gemischten Sonderabfälle in dem Ablagerungsbereich (3) erstarrend abgelagert werden, das bzw. die eine weitgehend vollständige Nutzung des Deponievolumens ermöglicht und die anfallende Menge an belasteten Abwässern verringert, wobei die Sonderabfälle in einer Behandlungsanlage (2) der Annahmestation (1) abgeladen und mit dem Bindemitteln zu einer förderbaren Formmasse (12) gemischt werden und die Formmasse über ein in den Ablagerungsbereich (3) führendes Leitungssystem (4) chargenweise in durch Einschalungen ausgebildete Schalungszellen (5) gefördert wird und zu Formkörpern (7) erstarrt.

## Beschreibung

Die vorliegende Erfindung betrifft ein Verfahren und eine Einrichtung zur oberirdischen Deponierung von anorganischen Sonderabfällen nach dem Oberbegriff des Anspruchs 1 bzw. des Anspruchs 10.

Zur Deponierung von anorganischen Sonderabfällen auf einer Deponie ist bekannt, mit Bindemitteln gemischte Sonderabfälle in Fahrzeugen in einen Ablagerungsbereich eines Deponiegeländes zu fahren und dort abzuladen. Die abgeladenen Sonderabfälle werden dann von einem Kompaktor verteilt und verdichtet, um schließlich zu einer relativ großflächigen Schicht auszuhärten bzw. zu erstarren. Nach Erstarren einer ersten Schicht werden auf diese weitere Schichten von Sonderabfällen abgelagert. Um den relativ schweren Fahrzeugen eine ausreichende Fahrsicherheit zu bieten und Abdichtungslagen des Ablagerungsbereichs vor Beschädigungen zu schützen, ist der Ablagerungsbereich im allgemeinen mit Fahrbahnen aus Aufschüttungen mit einer Mächtigkeit von bis zu 1 m für die Fahrzeuge versehen. Solche Fahrbahnen werden auch auf den bereits erstarrten Schichten aus Sonderabfall aufgeschüttet, wobei sie zusätzlich eine Kontamination des Fahrwerks und der Reifen der Fahrzeuge verhindern sollen und verbleiben beim weiteren Verfüllen der Deponie in dem späteren Deponiekörper.

Bei einer derartigen Deponierung von anorganischen Sonderabfällen wird das zur Verfügung stehende Deponievolumen nicht vollständig genutzt, da die Fahrbahnen im späteren Deponiekörper verbleiben. Die großflächigen Schichten von Sonderabfällen bieten eine große Kontaktfläche für Niederschläge und können zu einem Anfall relativ hoch belasteter Abwässer führen.

Ferner kann eine Kontamination der Fahrzeuge nicht zuverlässig vermieden werden, so daß diese vor dem Verlassen des Deponiegländes gereinigt werden müssen, wobei weitere, belastete Abwässer anfallen.

Aufgabe der vorliegenden Erfindung ist es, ein Verfahren und eine Einrichtung zur oberirdischen Deponierung von Sonderabfällen nach dem Oberbegriff des Anspruchs 1 bzw. 10 anzugeben, das bzw. die eine weitgehend vollständige Nutzung des Deponievolumen ermöglicht und die anfallende Menge an belasteten Abwässern verringert.

Diese Aufgabe wird durch den kennzeichnenden Teil des Anspruchs 1 bzw. 10 gelöst.

Auf diese Weise kann das Deponievolumen weitgehend vollständig genutzt und die anfallende Menge an belasteten Abwässern deutlich verringert werden.

Dadurch, daß die Sonderabfälle in einer auf dem Deponiegelände vorgesehenen Behandlungsanlage abgeladen und mit den Bindemitteln zu einer förderbaren Formmasse gemischt werden, die über ein Leitungssystem in auf dem Ablagerungsbereich angeordnete Schalungszellen gefördert wird, entfällt ein Anlegen der Fahrbahnen sowie der problematische Verkehr der Lieferfahrzeuge und des Kompaktors in dem Ablagerungsbereich.

Eine Mischung verschiedenartiger Sonderabfälle in der Behandlungsanlage ermöglicht bereits eine einfache Neutralisierung ansonsten nebeneinander abgelagerter und miteinander reagierender Sonderabfälle mit einem minimierten Verbrauch an Neutralisationsmitteln.

Durch eine Ausformung der aus Sonderabfällen und Bindemitteln hergestellten Formmasse in Schalungszellen zu Formkörpern ist eine relativ kleine Kontaktfläche für Niederschläge mit dem im Einbaubereich abgelagerten Sonderabfällen gewährleistet.

Wird nach Erstarrung von einem oder zwei einander benachbarten Formkörper(n) zu einer Ablagerungsstufe der nächste Formkörper auf diesem oder diesen zumindest teilweise aufliegend zu einer darüberliegenden Ablagerungsstufe ausgeformt, kann die Kontaktfläche für Niederschläge während des Verfüllens an einer Stelle im Ablagerungsbereich vorteilhaft klein gehalten werden. Durch eine derartige Ausformung der Formkörper läßt sich eine Art Haftung zwischen benachbarten Formkörpern erzielen, wobei die eingefüllte Formmasse in Oberflächenunebenheiten bereits ausgeformter Formkörper eindringt und dort erstarrt. Für einen frühestmöglichen Beginn von Rekultivierungsmaßnahmen, wie z.B. dem Aufbau einer Deponieabdeckung, ist es zweckmäßig, daß die Formkörper an einem Randwall des Ablagerungsbereiches beginnend im wesentlichen stapelweise auf dem Ablagerungsbereich angeordnet werden, wobei die Formkörper zumindest bis etwa in Höhe des Randwalls aufeinanderliegend ausgeformt werden. Der durch die Formkörper entstehende Abfallkörper wird möglichst schnell vertikal entwickelt und die Endhöhe möglichst schnell erreicht.

Die Schalungszellen können in besonders einfacher Weise zumindest teilweise durch Seitenwände bereits erstarrter Formkörper ausgebildet werden. Schalungswandungen der Schalungszellen werden bevorzugt aus modular zusammensetzbaren Schalelementen aufgebaut und an bereits erstarrten Formkörpern demontierbar befestigt. Zweckmäßigerweise nimmt eine Schalungszelle ein Tagesproduktionsvolumen an Formmasse auf, das in Abhängigkeit der Kapazität der Behandlungsanlage und der vorgehaltenen Sonderabfallmenge 10 bis 250 m³ betragen kann. Bei einer im wesentlichen quarderförmigen Ausbildung einer Schalungszelle mit Schalelementen liegt deren Höhe in etwa zwischen 1 - 3 m, wodurch eine einfache Montage und Demontage möglich ist. Bei dieser Höhe ist der durch die eingefüllten Formmasse erzeugte hydraulische Druck noch mit relativ geringem Schalungsaufwand beherrschbar. Bei einer allseitigen Ausbildung der Schalungszelle durch bereits erstarrte Formkörper kann die Höhe auch über diesen Werten liegen.

Durch eine Zumischung und Einbindung von in dem Ablagerungsbereich anfallender, belasteter Abwässer in die Formkörper ist ein weitgehend abwasserfreier Betrieb der Deponie ermöglicht. Eine Reinigung von Deponiesickerwasser, sei es durch eine hierzu im allgemeinen stationär vorgesehene Reinigungsanlage oder einen Transport zu einer Kläranlage, entfällt hierbei gänzlich. Getrennt gesammelte unbelastete Oberflächenwässer können schadstofffrei gehalten und in einen Vorfluter eingeleitet werden.

Wird die förderbare Formmasse unter relativ hohem Druck durch das Leitungssystem gepumpt, so kann sie bereits weitgehend verdichtet und blasenfrei in die Schalungszellen eingefüllt werden, wodurch eine Entgasung bzw. ein Rütteln entfallen kann.

Vorteilhaft wird die förderbare Formmasse unter einem Druck von in etwa 10 - 70 bar, bevorzugt 20 - 60 bar, durch das Leitungssystem gepumpt.

Weitere Ausgestaltung der Erfindung sind den Unteransprüchen und der nachfolgenden Beschreibung zu entnehmen.

Die Erfindung wird nachfolgend anhand eines Ausführungsbeispiels einer Einrichtung zur oberirdischen Deponierung von anorganischen Sonderabfällen näher erläutert.

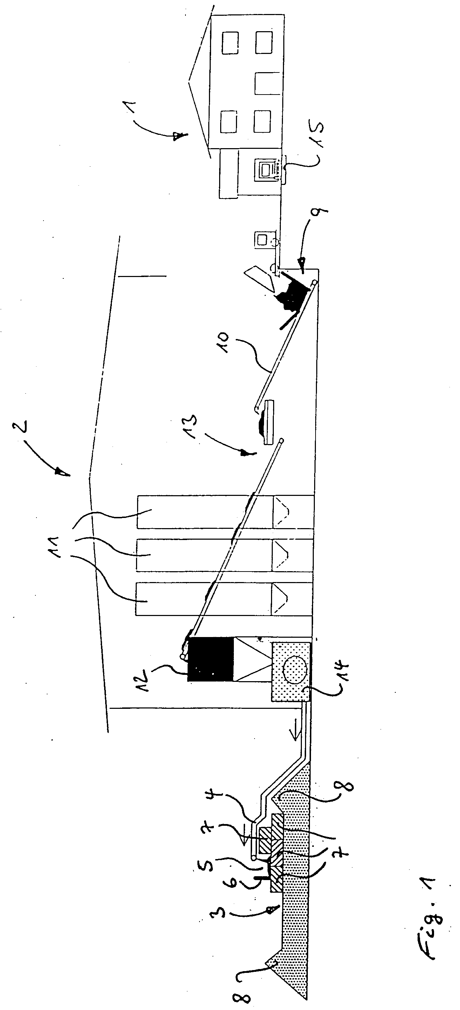

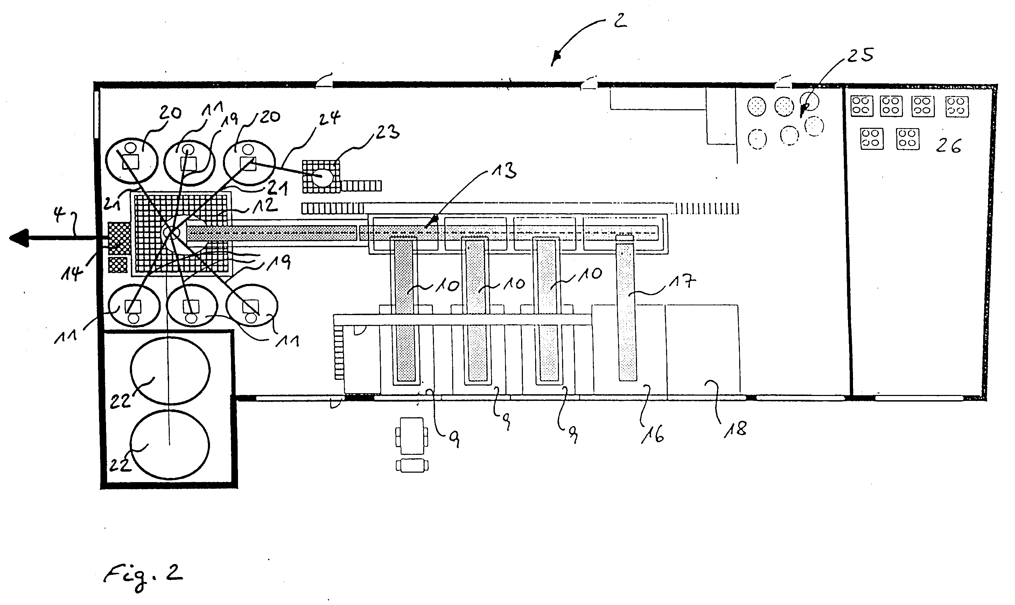

Figur 1 zeigt schematisch eine Ansicht einer Einrichtung. Figur 2 zeigt eine teilweise Draufsicht auf eine Einrichtung.

Die in Figur 1 schematisch dargestellte Einrichtung umfaßt eine Annahmestation 1, eine Behandlungsanlage 2, ein von der Behandlungsanlage 2 in einen Ablagerungsbereich 3 führendes Leitungssystem 4 und eine Schalungszelle 5, in die das Leitungssystem 4 mündet. Die Schalungszelle 5 ist an einer Seite durch eine Schalungswandung 6 und an der gegenüberliegenden Seite durch einen Formkörper 7 begrenzt. Der Ablagerungsbereich 3 ist von zwei Randwällen 8 umgeben.

Die Behandlungsanlage 2 umfaßt Annahmebunker 9 mit zugeordneten Fördervorrichtungen 10, Silos 11 für Bindemittel, einen Mischer 12 mit einer zugeordneten Fördervorrichtung 13, die von den Fördervorrichtungen 10 ankommende Sonderabfälle aufnimmt. Die Silos 11 sind über Dosierleitungen mit dem Mischer 12 verbunden. Dem Mischer 12 ist austragsseitig eine Dickstoffpumpe 14 mit einem Vorlagebehälter nachgeordnet, die das Leitungssystem 4 speist.

Die Annahmestation 1 ist mit einer Waage 15 und einem nicht dargestellten Labor zur Untersuchung der Sonderabfälle versehen.

Die in Figur 2 dargestellte Behandlungsanlage 2 umfaßt drei nebeneinander angeordnete Annahmebunker 9, mit jeweils zugeordneten Fördervorrichtungen 10, die auf eine als Wiegeband 13 mit nachgeschaltetem Steigband ausgebildete Fördervorrichtung führen. Neben den Annahmebunkern 9 ist ein weiterer Annahmebunker 16 mit einer Fördervorrichtung 17 und einem nebengeordneten Bunker 18 vorgesehen. In dem Bunker 18 werden grobkörnige Sonderabfälle angenommen und nach einer ggf. notwendigen Zerkleinerung durch eine mobile Zerkleinerungsvorrichtung in den Bunker 16 transportiert, um dort bei Bedarf über die Fördervorrichtung 17 auf das Wiegeband 13 zudosiert zu werden. An dem in Förderrichtung liegenden Ende des dem Wiegeband 13 nachgeschalteten Steigbands ist ein Mischer 12 angeordnet, der über Dosierleitungen 19 mit Silos 11 für Bindemittel verbunden ist. Benachbart zu dem Mischer 12 und einem Silo 11 sind zwei Staubsilos 20 zur Aufnahme von staubförmigen Abfällen vorgesehen, die über Dosierleitungen 21 mit dem Mischer 12 verbunden sind. Dem Mischer 12 ist austragsseitig eine Dickstoffpumpe 14 nachgeordnet, an die das Leitungssystem 4 angeschlossen ist. Benachbart zu den Silos 11 sind zwei Tanks 22 zur Aufnahme von in einer nicht dargestellten Sammelleitung gesammelten Abwässern aus dem Ablagerungsbereich 3 vorgesehen. Die Tanks 22 sind über nicht dargestellte Leitungen mit dem Mischer 12 verbunden. Zur Aufgabe ggf. in Bigbags angelieferter Sonderabfälle ist eine Entleerungsstation 23 in der Behandlungsanlage 2 vorgesehen, wobei die Entleerungsstation 23 über eine Leitung 24 mit einem Staubsilo 20 verbunden ist. Zur Bereitstellung ggf. angelieferter Bigbags ist ein Lagerbereich 25 und zur Zwischenlagerung von bereits verfestigten Sonderabfällen, wie z.B. Asbest, ein abgetrenntes Lager 26 vorgesehen.

Ein mit Sonderabfällen beladenes Fahrzeug fährt zunächst die Annahmestation 1 an und wird auf der Waage 15 verwogen. Ferner wird eine Sonderabfallprobe entnommen und in dem vorgesehenen Labor analysiert. Anschließend fährt das Fahrzeug zu den Annahmebunkern 9, 16, 18 und kippt den Sonderabfall in einen der Bunker ab. Sofern die Sonderabfälle eine schlammartige Konsistenz aufweisen, werden sie in einen der Bunker 9, bei feinkörniger Struktur in den Bunker 16 und bei grobkörniger Struktur in den Bunker 18 abgekippt. Lose angelieferte Sonderabfälle mit einer staubförmigen Konsistenz werden in das in Figur 2 links dargestellte Staubsilo 20 von einem Fahrzeug aus abgesaugt. Nach dem Abladen der Sonderabfälle verlassen die Fahrzeuge das Deponiegelände, wobei sie zur Erfassung der angelieferten Sonderabfallmenge noch einmal auf der Waage 15 leer verwogen werden.

Aus den in den Bunkern 9, 16, 18 und dem Staubsilo 20 gelagerten Sonderabfällen sowie aus den in den Silos 11 bevorrateten Bindemitteln werden in dem Mischer 12 chargenweise Formmassen gemischt. Zur Einstellung der Viskosität werden Abwässer aus den Tanks 22 und bei Bedarf Wasser in den Mischer gepumpt. Hierbei gelangen nach Rezepturen festgelegte Mengen über die steuerbar vorgesehenen Fördervorrichtungen 10, 17 auf das Wiegeband 13 und werden von diesem von oben in den Mischer 12 eingefüllt. Das Wiegeband 13 ist mit Wiegezellen derartig versehen, daß beispielsweise die Fördervorrichtung 10 so lange auf einen Abschnitt des Wiegebandes 13 fördert, bis eine nach einer Rezeptur vorgesehene Menge auf dem Wiegeband 13 liegt. Entsprechend der Rezeptur werden noch Bindemittel aus den Silos 11 über die Dosierleitungen 19 der eingefüllten Abfallmischung zugegeben und mit Abwässern aus den Tanks 22 und ggf. notwendigem Wasser vermischt. Ggf. noch notwendige Neutralisationsmittel können in einem oder mehreren der Silos 11 vorgehalten und bei Bedarf zugemischt werden. Nach einer ausreichenden Homogenisierung der anzumischenden Formmasse wird diese über die Dickstoffpumpe 14 aus dem Vorlagebehälter in das Leitungssystem 4 gedrückt.

Bei einer Verarbeitung von in Bigbags angelieferter Sonderabfälle werden diese aus dem Lagerbereich 25 zur Entleerungsstation 23 transportiert. Ggf. grobstückige Sonderabfälle werden automatisch auf eine förderbare Korngröße durch eine in der Eintleerungsstation 23 vorgesehene Zerkleinerungsvorrichtung zerkleinert und über die Leitung 24, die an eine das benachbarte Staubsilo 20 angeschlossen ist, in den Mischer 12 eingetragen.

Nachdem eine Schalungszelle 5 einer Charge von Sonderabfällen und Bindemitteln aufgefüllt ist, wird mit die nächste Schalungszelle 5 vorbereitet.

Die in dem Mischer 12 abgemischte Formmasse wird über die Dickstoffpumpe 14 in das Leitungssystem 4 gespeist und zu einer in dem Ablagerungsbereich 3 bereitgestellten Schalungszelle 5 gepumpt. Die Schalungswandung 6 der Schalungszelle 5 ist aus modularen Schalungselementen zusammengesetzt und wird durch einen nicht dargestellten Halterahmen an dem gegenüberliegenden Formkörper 7 gehalten. Zur Bildung von Halteelementen zur Befestigung der Schalungswandung 6 werden ankerförmige Bauteile in einem sich verfestigenden Formkörper 7 eingelegt. Nach einer Erstarrung der in die Schalungszelle 5 verfüllten Formmasse zu einem Formkörper 7 wird die Schalungswandung 6 demontiert.

Die Formkörper 7 werden von dem Randwall 8 beginnend stapelweise aufeinander angeordnet.

Nach Erreichen der vorgesehenen Stapelhöhe erfolgt bereits die Aufbringung des Deponieoberflächenabdichtungs-Systems mit den ersten Rekultivierungsmaßnahmen im Bereich des Randwalls 8.

Freie Oberflächen der Formkörper 7 werden temporär bis zum Ausformen eines weiteren Formkörpers 7 oder bis zur Aufbringung des Deponieoberflächenabdichtungs-Systems durch eine Abdeckfolie abgedichtet, die an Halteelementen in benachbarten Formkörpern 7 befestigt wird. Hierdurch kann die Abdeckfolie auch bei ungünstigen Windverhältnissen sicher die Formkörper 7 abdecken. Das auf diesen Folien gesammelte Niederschlagswasser wird über ein geeignetes Sammelsystem getrennt von Deponiesickerwasser erfaßt und in ein nicht dargestelltes Sammelbecken für Oberflächenwasser abgeleitet.

Die Schalungszellen 5 können im wesentlichen ohne zusätzliche Rüttelvorrichtungen von unten nach oben mit einer aufsteigenden Formmasse befüllt werden. Die Formmasse kann auch von oben eingefüllt werden, wobei in die Formmasse eintauchbare Rüttelvorrichtungen für eine ausreichende Verteilung in der Schalungszelle eingesetzt werden. Die Schalungszellen 5 nehmen ein Volumen von 40 bis 80 m³ an Formmasse auf, das in etwa einem mittleren Tagesproduktionsvolumen entspricht.

Bereits verfestigt angelieferte Sonderabfälle werden aus dem Lager 26 in den Ablagerungsbereich 3 transportiert und in die Formkörper 7 mit eingegossen oder neben diesen abgelagert.

Die bei der vorliegenden Erfindung vorgesehene Art der Abfalleinlagerung verbessert die Standfestigkeit des Deponiekörpers und ermöglicht ein gleichförmiges Setzungsverhalten sowie eine gleichförmige Lastverteilung. Ferner wird hiermit ermöglicht, ggf. später wiederaufarbeitbare Sonderabfälle getrennt von weitgehend unbrauchbaren Sonderabfällen abzulagern. Der Ablagerungsbereich 3 kann hierzu in zwei gegenüberliegend angeordnete Bereiche aufgeteilt werden, wobei in dem einen Bereich aufarbeitbare Sonderabfälle und in dem anderen Bereich unbrauchbare Sonderabfälle eingelagert werden, wodurch eine vertikale Trennung des Deponiekörpers erreicht wird. Durch eine Aufeinanderschichtung der Formkörper 7 ist ein ggf. später vorzunehmender Rückbau bestimmter Sonderabfälle relativ einfach möglich, während bei einem Anlegen von durchgängig horizontalen flachen Schichten ein derartiger Rückbau einen weitaus höheren Aufwand erfordern würde.

## Patentansprüche

1. Verfahren zur oberirdischen Deponierung von anorganischen Sonderabfällen auf einem Deponiegelände mit einer Annahmestation und einem Ablagerungsbereich, bei dem die mit Bindemitteln gemischten Sonderabfälle in dem Ablagerungsbereich erstarrend abgelagert werden, dadurch gekennzeichnet, daß die Sonderabfälle in einer Behandlungsanlage der Annahmestation abgeladen und mit den Bindemitteln zu einer förderbaren Formmasse gemischt werden und die Formmasse über ein in den Ablagerungsbereich führendes Leitungssystem chargenweise in durch Einschalungen ausgebildete Schalungszellen gefördert wird und zu Formkörpern erstarrt und die Schalungszellen zumindest teilweise durch Seitenwände bereits erstarrter Formkörper ausgebildet werden.

2. Verfahren nach Anspruch 1, dadurch gekennzeichnet, daß nach Erstarrung von einem oder zwei einander benachbarten Formkörper(n) zu einer Ablagerungsstufe der nächste Formkörper auf diesem oder diesen zumindest teilweise aufliegend zu einer darüberliegenden Ablagerungsstufe ausgeformt wird.

3. Verfahren nach Anspruch 1 oder 2, dadurch gekennzeichnet, daß die Formkörper an einem Randwall des Ablagerungsbereiches beginnend im wesentlichen stapelweise auf dem Ablagerungsbereich angeordnet werden, wobei die Formkörper zumindest bis etwa in Höhe des Randwalls aufeinanderliegend ausgeformt werden.

4. Verfahren nach einem der Ansprüche 1 bis 3, dadurch gekennzeichnet, daß Schalungswandungen der Einschalungen aus modular zusammensetzbaren Schalelementen aufgebaut und an bereits erstarrten Formkörpern demontierbar befestigt werden.

5. Verfahren nach einem der Ansprüche 1 bis 4, dadurch gekennzeichnet, daß eine Schalungszelle ein Volumen von 10 bis 250 m³ an Formmasse aufnimmt.

6. Verfahren nach einem der Ansprüche 1 bis 5, dadurch gekennzeichnet, daß eine Schalungszelle mit Schalelementen eine Höhe von 1 bis 3 m aufweist.

7. Verfahren nach einem der Ansprüche 1 bis 6, dadurch gekennzeichnet, daß ggf. im Ablagerungsbereich anfallende, belastete Abwässer über ein Drainagesystem gesammelt und zur Mischung mit den Sonderabfällen und den Bindemitteln zu der Behandlungsanlage geleitet werden.

8. Verfahren nach einem der Ansprüche 1 bis 7, dadurch gekennzeichnet, daß die verfüllten Schalungszellen bis zur Erstarrung der Formmasse durch eine Abdeckfolie temporär abgedichtet werden.

9. Verfahren nach einem der Ansprüche 1 bis 8, dadurch gekennzeichnet, daß die förderbare Frommasse unter einem Druck von in etwa 10 - 70 bar, bevorzugt 20 - 60 bar, durch das Leitungssystem gepumpt wird.

10. Einrichtung zur Durchführung des Verfahrens nach einem der Ansprüche 1 - 9 mit ei nem Ablagerungsbereich (3) auf einem Deponiegelände mit einer Annahmestation (1), dadurch gekennzeichnet, daß die Annahmestation (1) eine Behandlungsanlage (2) für die Sonderabfälle umfaßt, die Annahmebunker (9, 16, 18) für die Sonderabfälle, Silos (11) für Bindemittel und einen über Fördervorrichtungen (10, 17) mit den Annahmebunkern (9, 16, 18) und über Dosierleitungen (19) mit den Silos (11) verbundenen Mischer (12) aufweist und über ein mit einer Förderpumpe (14) versehenes Leitungssystem (4) mit in dem Ablagerungsbereich (3) demontierbar angeordneten Schalungszellen (5) verbunden ist.

11. Einrichtung nach Anspruch 10, dadurch gekennzeichnet, daß die Behandlungsanlage (2) mit einer Sammelleitung für in dem Ablagerungsbereich (3) anfallende Abwässer verbunden und einem Sammelbehälter (22) für die Abwässer versehen ist, der über eine Leitung an den Mischer (12) angeschlossen ist.

12. Einrichtung nach Anspruch 10 oder 11, dadurch gekennzeichnet, daß eine in den Mischer (12) fördernde Fördervorrichtung (13) als Wiegeband ausgebildet ist.

13. Einrichtung nach einem der Ansprüche 10 bis 12, dadurch gekennzeichnet, daß die Behandlungsanlage (2) mit wenigstens einem Staubsilo (20) zur Aufnahme von staubförmigen Sonderabfällen versehen ist, das über eine Förderleitung (21) mit dem Mischer (12) in Verbindung steht.

14. Einrichtung nach einem der Ansprüche 10 bis 13, dadurch gekennzeichnet, daß die Behandlungsanlage (2) eine Zerkleinerungsvorrichtung für grobkörnigen Sonderabfall aufweist.
